# EUROPÄISCHE PATENTSCHRIFT

(11) **EP 1 289 734 B1**
(45) Veröffentlichungstag und Bekanntmachung des Hinweises auf die Patenterteilung: **14.07.2004**
(21) Anmeldenummer: 01929602.9
(22) Anmeldetag: 25.04.2001
(51) Int. Cl.: B29C 59/02, B30B 15/06, C25D 11/02

(54) **PRÄGEWERKZEUG, VERFAHREN ZUR STRUKTURIERUNG EINER OBERFLÄCHE EINES WERKSTÜCKS UND VERWENDUNG EINER ANODISCH OXIDIERTEN OBERFLÄCHENSCHICHT**
STAMPING TOOL, METHOD FOR STRUCTURING A SURFACE OF A WORKPIECE AND USE OF AN ANODIZED SURFACE LAYER
OUTIL D'ESTAMPAGE, PROCEDE DE STRUCTURATION DE LA SURFACE D'UNE PIECE ET UTILISATION D'UNE COUCHE SUPERFICIELLE ANODIQUEMENT OXYDEE

(30) Priorität: 28.04.2000 DE 10020877
(43) Veröffentlichungstag der Anmeldung: 12.03.2003
(73) Patentinhaber: AlCove Surfaces GmbH, 45966 Gladbeck (DE)
(72) Erfinder: SAWITOWSKI, Thomas, 45133 Essen (DE)
(74) Vertreter: Gesthuysen, von Rohr & Eggert
(86) Internationale Anmeldenummer: PCT/EP2001/004650
(87) Internationale Veröffentlichungsnummer: WO 2001/083198

(56) Entgegenhaltungen:
- EP-A- 0 792 951
- EP-A- 0 931 859
- FR-A- 2 762 862
- US-A- 5 693 208
- US-A- 5 693 210

## Beschreibung

Die vorliegende Erfindung betrifft ein Prägewerkzeug mit einer strukturierten Prägefläche, ein Verfahren zum Herstellen eines Prägewerkzeugs mit einer strukturierten Prägefläche, ein Verfahren zur Strukturierung einer Oberfläche eines Werkstücks und eine Verwendung einer mit offenen Hohlräumen durch anodische Oxidation versehenen Oberflächenschicht.

Das Prägen stellt eine umformende Fertigungsmethode dar, um eine reliefartige bzw. strukturierte Oberfläche auf einem Werkstück zu erzeugen. Hierbei wird ein Prägewerkzeug mit einer profilierten bzw. strukturierten Prägefläche verwendet. Die Prägefläche wird mit einer derartigen Prägekraft auf die zu strukturierende Oberfläche des Werkstücks gepresst bzw. auf dieser abgerollt, daß das Werkstück plastisch wird und in Vertiefungen des Prägewerkzeugs bzw. der Prägefläche fließt. Aufgrund der hohen Prägekräfte bestehen das Prägewerkzeug und die Prägefläche üblicherweise aus Metall.

Die Herstellung eines Prägewerkzeugs mit einer sehr fein strukturierten bzw. profilierten Prägefläche ist sehr aufwendig. Zur Erzeugung einer sogenannten "Mottenaugenstruktur" - regelmäßig angeordnete, eierkartonartige Erhebungen - oder feiner Rillen im Nanometerbereich ist es aus der Praxis bekannt, durch zwei interferierende Laserstrahlen ein Belichtungsmuster mit periodischer Intensitätsmodulation zur Belichtung von photoempfindlichem Material zu verwenden. Nach Entwicklung des belichteten Materials entsteht eine periodische Oberflächenstruktur, die über verschiedene Replikationsverfahren in andere Materialien und schließlich beispielsweise in Nickel durch Galvanoformung abgeformt wird. Eine derartige Herstellung ist sehr aufwendig und nur zur Strukturierung ebener Oberflächen geeignet.

Unter Nanometerbereich sind bei der vorliegenden Erfindung Profilierungen bzw. Strukturierungen mit Strukturbreiten < 1000 nm, insbesondere < 500 nm, zu verstehen. Die Strukturbreite bezeichnet das Maß, mit dem sich einzelne Strukturelemente, wie Erhebungen, wiederholen, d. h. also beispielsweise den Mittenabstand voneinander benachbarter Erhebungen oder Vertiefungen.

Im Nanometerbereich sind lithographische Verfahren zur Strukturierung einer Prägefläche eines Prägewerkzeugs nur noch sehr bedingt einsetzbar. Hier ist zu berücksichtigen, daß allein die Wellenlänge des sichtbaren Lichts bereits 400 bis 750 nm beträgt. In jedem Fall sind die lithographischen Verfahren sehr aufwendig.

Die DE 197 27 132 C2 offenbart die Herstellung eines Prägewerkzeugs durch Elysieren. Beim Elysieren wird eine metallische Prägefläche des Prägewerkzeugs elektrolytisch bearbeitet, wobei das Metall der Prägefläche sich als Anode in einem rasch fließenden Elektrolyten einer Katode in geringem Abstand gegenüber befindet und oberflächlich gelöst wird. Hierbei erhält das Metall bzw. die Prägefläche die durch die Form der Katode bestimmte Struktur, die Katode bildet also eine Vorlage, die elektrochemisch abgeformt wird. Weiter sieht die DE 197 27 132 C2 die Verwendung einer walzenförmigen Rotationselektrode vor, deren Mantelfläche eine Negativform der gewünschten Prägestruktur aufweist. Auch hier ist der Aufwand beträchtlich und eine Strukturierung im Nanometerbereich allenfalls bedingt möglich.

Die FR 2 762 862 A1, die den nächstliegenden Stand der Technik bildet, offenbart eine Kalanderwalze, deren Prägefläche primär durch eine übliches Bearbeiten bzw. Gravieren strukturiert wird. Eine anschließende anodische Oxidation dient ausschließlich einer zufälligen Abtragung bzw. Deformierung der zuvor durch das Gravieren vorgegebenen Oberflächenform.

Der vorliegenden Erfindung liegt die Aufgabe zugrunde, ein Prägewerkzeug, ein Verfahren zum Herstellen eines Prägewerkzeugs, ein Verfahren zur Strukturierung einer Oberfläche eines Werkstücks und eine Verwendung einer mit offenen Hohlräumen durch anodische Oxidation versehenen Oberflächenschicht zu schaffen, wobei auf einfache, kostengünstige Weise eine Strukturierung im Nanometerbereich ermöglicht wird.

Die obige Aufgabe wird durch ein Prägewerkzeug gemäß Anspruch 1, durch ein Verfahren gemäß Anspruch 10 oder 15 oder durch eine Verwendung gemäß Anspruch 17 gelöst. Vorteilhafte Weiterbildungen sind Gegenstand der Unteransprüche.

Eine wesentliche Idee der vorliegenden Erfindung liegt darin, eine poröse Oxidschicht und zwar insbesondere eine Oberflächenschicht mit offenen Hohlräumen, die durch anodische Oxidation unmittelbar bzw. vorlagenfrei, also unabhängig von einer Katodenform, gebildet werden, als Prägefläche eines Prägewerkzeugs einzusetzen. Dies führt zu mehreren Vorteilen.

Erstens, eine Oxidschicht, insbesondere das vorzugsweise vorgesehene Aluminiumoxid, ist verhältnismäßig hart. Dies ist im Hinblick auf die oftmals sehr hohen Prägekräfte vorteilhaft, um Werkstücke verschiedenster Materialien prägen zu können und um eine hohe Standzeit des Prägewerkzeugs zu erreichen.

Zweitens, die vorlagenfreie Oxidation ist sehr einfach und kostengünstig realisierbar. Insbesondere ist die Erzeugung der Hohlräume (quasi) unabhängig von der Form und Anordnung der verwendeten Katode, also eine Vorlage bzw. Negativform wie beim Elysieren nicht erforderlich.

Drittens, die vorgesehene vorlagenfreie Ausbildung von offenen Hohlräumen durch anodische Oxidierung ermöglicht auf sehr einfache, kostengünstige Weise die Herstellung von Strukturen im Nanometerbereich. Insbesondere werden Strukturbreiten von 500 nm und weniger, sogar von 100 nm und weniger ermöglicht.

Viertens, je nach Wahl der Verfahrensbedingungen kann die Anordnung - regelmäßig oder unregelmäßig ― und die Flächendichte der Hohlräume bedarfsgerecht variiert werden.

Fünftens, ebenfalls durch einfache Variation der Verfahrensbedingungen - insbesondere durch Variation der Spannung bei der Anodisierung - kann die Form der Hohlräume und damit der Struktur der Prägefläche eingestellt und variiert werden.

Sechstens, die anodisch oxidierte Oberflächenschicht kann direkt, also ohne weiteres Abformen, als Prägefläche eines Prägewerkzeugs eingesetzt werden.

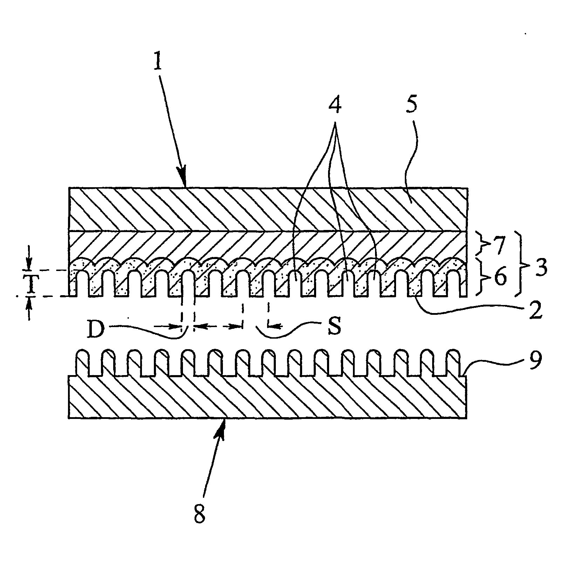

Weitere Vorteile, Eigenschaften, Merkmale und Ziele der vorliegenden Erfindung ergeben sich aus der nachfolgenden Beschreibung eines bevorzugten Ausführungsbeispiels anhand der Zeichnung. Die einzige Figur zeigt
eine sehr schematische Schnittdarstellung eines vorschlagsgemäßen Prägewerkzeugs und eines damit strukturierten Werkstücks.

Die Figur zeigt in einer sehr vereinfachten Schnittdarstellung ein vorschlagsgemäßes Prägewerkzeug 1 mit einer strukturierten, also profilierten bzw. reliefartigen Prägefläche 2. Die Prägefläche 2 ist durch eine Flachseite einer Oberflächenschicht 3 gebildet, die mit offenen, durch anodische Oxidation erzeugten Hohlräumen 4 versehen ist.

Beim Darstellungsbeispiel ist die Oberflächenschicht auf einen Träger 5 des Prägewerkzeugs 1 aufgebracht. Beispielsweise ist die Oberflächenschicht 3 durch Plasmabeschichtung auf den Träger 5 aufgebracht. Jedoch kann die Oberflächenschicht 3 auch unmittelbar von dem Träger 5 gebildet, also ein Oberflächenbereich des Trägers 5 sein.

Selbstverständlich kann die Oberflächenschicht 3 auch durch andere Verfahren auf dem Träger 5 abgeschieden werden.

Beim Darstellungsbeispiel besteht die Oberflächenschicht 3 vorzugsweise aus Aluminium, das insbesondere durch Plasmabeschichten auf den Träger 5 aufgebracht wird und auf dem vorzugsweise aus Metall, insbesondere Eisen oder Stahl, bestehenden Träger 5 sehr gut haftet.

Die Oberflächenschicht 3 ist zumindest teilweise, beim Darstellungsbeispiel bis zur Tiefe einer Deckschicht 6 anodisch oxidiert, wodurch die Hohlräume 4 in der Oberflächenschicht 3 unmittelbar gebildet sind. Die Hohlräume 4 werden unmittelbar bzw. vorlagenfrei gebildet, d.h. die Anordnung, Verteilung, Form u. dgl. der Hohlräume 4 ist - im Gegensatz zum Elysieren - also zumindest im wesentlichen unabhängig von der Oberflächenform und Nähe der beim Oxidieren verwendeten (nicht dargestellten) Katode. Vielmehr wird erfindungsgemäß der "Ventileffekt", nämlich die beim Oxidieren bzw. Anodisieren der Oberflächenschicht 3 - zumindest insbesondere bei den sogenannten Ventilmetallen - auftretende, selbständige Bildung der Hohlräume 4 ausgenutzt. Diese unmittelbare bzw. vorlagenfreie Erzeugung der Hohlräume 4 schließt eine zusätzliche (vorherige oder spätere) Formung bzw. Strukturierung der Prägefläche 2 bzw. der Hohlräume 4 durch eine Negativform jedoch nicht aus.

Je nachdem, wie vollständig bzw. wie tief die Oberflächenschicht 3 oxidiert ist oder ob die Oberflächenschicht 3 unmittelbar vom Träger 5 gebildet ist, kann die Oberflächenschicht 3 der oxidierten Deckschicht 6 entsprechen. In diesem Fall kann beispielsweise die beim Darstellungsbeispiel aus Aluminium bestehende Zwischenschicht 7, die eine sehr gute Haftung zwischen der Deckschicht 6 und dem Träger 5 vermittelt, entfallen.

Beispielsweise kann gemäß einer Ausführungsalternative der unbeschichtete Träger 5 auf seiner die Prägefläche 2 bildenden Oberfläche unter Bildung einer porösen Oxidschicht bzw. von Hohlräumen 4 anodisch oxidiert sein. Dies ist beispielsweise bei einem Träger 5 aus Eisen oder Stahl, insbesondere Edelstahl, möglich. In diesem Fall entspricht dann die Oberflächenschicht 3 der Deckschicht 6, also der oxidierten Schicht.

Aluminium und Eisen bzw. Stahl, insbesondere Edelstahl, wurden bereits als besonders bevorzugtes Material genannt, das zumindest im wesentlichen zur Bildung der anodisch oxidierten Oberflächenschicht 3 bzw. der Deckschicht 6 verwendet wird. Jedoch können beispielsweise auch Silizium und Titan sowie sonstige Ventilmetalle eingesetzt werden.

Beim Darstellungsbeispiel sind die Größenverhältnisse nicht maßstabsgetreu dargestellt.

Das Prägewerkzeug 1 bzw. dessen Prägefläche 2 weist vorzugsweise eine Strukturbreite S im Nanometerbereich auf, insbesondere von 30 bis 600 nm und vorzugsweise von 50 bis 200 nm.

Die Hohlräume 4 bzw. deren Öffnungen weisen einen mittleren Durchmesser D von im wesentlichen 10 bis 500 nm, vorzugsweise von 15 bis 200 nm und insbesondere von 20 bis 100 nm, auf.

Die Hohlräume 4 sind beim Darstellungsbeispiel im wesentlich länglich ausgebildet, wobei ihre Tiefe T vorzugsweise mindestens etwa das 0,5-fache des vorgenannten, mittleren Durchmessers D und insbesondere etwa das 1,0- bis 1 0-fache des Durchmessers D beträgt.

Die Hohlräume 4 sind hier zumindest im wesentlichen gleichförmig ausgebildet. Insbesondere sind die Hohlräume 4 im wesentlichen zylindrisch ausgebildet. Jedoch können die Hohlräume 4 auch eine davon abweichende Form aufweisen, beispielsweise im wesentlichen konisch ausgebildet sein.

Generell können die Hohlräume 4 auch einen über ihre Tiefe T in Form und/oder Durchmesser variierenden Querschnitt aufweisen. Darüber hinaus können die Hohlräume 4 als Grobstruktur beispielsweise jeweils im wesentlichen konisch ausgebildet sein und zur Bildung einer Feinstruktur entlang ihrer Wandungen jeweils beispielsweise mit vielen feinen Vertiefungen (kleinen Hohlräumen) versehen sein.

Vorzugsweise sind die Hohlräume 4 zumindest im wesentlichen regelmäßig über die Oberfläche der Oberflächenschicht 3 bzw. über die Prägefläche 2 verteilt angeordnet. Jedoch kommt auch eine unregelmäßige Verteilung in Betracht.

Vorzugsweise sind die Hohlräume bzw. deren Öffnungen mit einer Flächendichte von 10⁹ bis 10¹¹/cm² über die Prägefläche 2 verteilt. Beim Darstellungsbeispiel ist die Flächendichte über die Prägefläche 2 im wesentlichen konstant. Jedoch kann die Flächendichte je nach Bedarf auch bereichsweise auf der Prägefläche 2 variieren.

Die Fläche der Öffnungen der Hohlräume 4 beträgt vorzugsweise höchstens 50 % der Ausdehnungsfläche der Prägefläche 2. Hierdurch wird eine ausreichend hohe Stabilität bzw. Belastbarkeit der Prägefläche 2 bzw. der Oberflächenschicht 3 / Deckschicht 6 im Hinblick auf die hohen beim Prägen auftretenden Beanspruchungen erreicht.

Generell kann die Form, Anordnung, Flächendichte und dergleichen der Hohlräume 4 durch entsprechende Wahl der Verfahrensbedingungen beim anodischen Oxidieren gesteuert werden. Beispielsweise wird bei der Oxidation von Aluminium unter potentiostatischen Bedingungen - also bei zumindest im wesentlichen konstanter Spannung - ein zumindest im wesentlichen gleichmäßiger Querschnitt der Hohlräume 4 über deren Tiefe T hinweg, also eine zumindest im wesentlichen zylindrische Form erzielt. Entsprechend kann durch Variation der Spannung die Form der Hohlräume 4 beeinflußt werden. Beispielsweise führt eine galvanostatische Oxidierung - d. h. bei zumindest im wesentlichen konstantem Strom - zu einer etwa konusförmigen oder hügelartigen Form der Hohlräume 4, so daß auf diese Weise eine Art "Mottenaugenstruktur" o. dgl. gebildet werden kann. Weiter hängt die Flächendichte der Hohlräume 4, d. h. die Anzahl der Hohlräume 4 pro Flächeneinheit auf der Prägefläche 2, u. a. von der Spannung und dem Strom beim Anodisieren ab.

Die Hohlräume 4 können bedarfsweise in ihrer Form, Tiefe und/oder Flächendichte über die Prägefläche 2, insbesondere bereichsweise, variieren und/oder nur bereichsweise auf der Prägefläche 2 ausgebildet sein.

Bedarfsweise kann die Prägefläche 2 auch vor und/oder nach dem Oxidieren - also Erzeugen der Hohlräume 4 - beispielsweise durch lithographische Verfahren, Ätzen und/oder sonstige, vorzugsweise materialabtragende Verfahren modifiziert sein, um beispielsweise eine Grobstruktur in Form von Bahnen, Stegen, Bereichen mit oder ohne Hohlräume 4, großflächigen Erhebungen oder Vertiefungen und dergleichen auf der Prägefläche 2 zu erzeugen.

Zur Modifikation der Prägefläche 2 bzw. der Hohlräume 4 kann auch eine chemische Aufweitung, insbesondere durch teilweises Wegätzen von Oxidmaterial, erfolgen. Auf diese Weise kann das Flächenverhältnis der Öffnungsflächen der Hohlräume 4 zu der Erstreckungsfläche der Prägefläche 2 variiert bzw. vergrößert werden. Selbstverständlich sind hierdurch auch andere Modifikationen der Prägefläche 2 bzw. der Hohlräume 4 - je nach Einwirkzeit und Intensität - möglich.

Ein besonderer Vorteil der vorschlagsgemäßen Lösung liegt darin, daß die Prägefläche 2 auch gekrümmt - beispielsweise zylindrisch - oder gewölbt - beispielsweise linsenförmig oder halbkugelförmig ― ausgebildet sein kann. Insbesondere kann die Prägefläche 2 praktisch jede beliebige Form aufweisen. Im Gegensatz zum Stand der Technik ist es also nicht erforderlich, daß die Prägefläche 2 bzw. die Oberfläche der Oberflächenschicht 3 / Deckschicht 6 zumindest im wesentlichen eben ist.

Die Figur zeigt ferner ein Werkstück 8, ebenfalls in einer stark vereinfachten, nicht maßstabsgetreuen Schnittdarstellung, im bereits geprägten Zustand, also mit einer durch das Prägewerkzeug 1 bereits strukturierten Oberfläche 9. Das Prägen erfolgt insbesondere dadurch, daß das Prägewerkzeug 1 mit einer entsprechenden Prägekraft auf die zu strukturierende Oberfläche 9 des Werkstücks 8 gepresst wird, so daß der Werkstoff des Werkstücks 8 zumindest partiell in die Hohlräume 4 fließt. Hierbei ist es nicht erforderlich, daß das Werkstück 8, wie in der Figur schematisch angedeutet, einstückig ausgebildet ist. Vielmehr kann das Werkstück 8 auch eine nicht dargestellte, andersartige Oberflächenschicht bzw. Oberflächenbeschichtung o. dgl. aufweisen, die die Oberfläche 9 bildet und mittels des Prägewerkzeugs 1 strukturiert bzw. reliefartig ausgebildet wird.

Anstelle des stempelartigen Prägens kann auch ein Abrollen des Prägewerkzeugs 1 bei entsprechender Ausgestaltung/Form der Prägefläche 2 und/oder der zu strukturierenden Oberfläche 9 erfolgen. Beispielsweise kann die Prägefläche 2 und/oder die zu strukturierende Oberfläche 9 gekrümmt - beispielsweise zylindrisch - oder gewölbt ausgebildet sein, um ein gegenseitiges Abrollen zur Strukturierung der Oberfläche 9 zu ermöglichen.

Mit der vorschlagsgemäßen Lösung läßt sich also sowohl ein Stempelprägeverfahren also auch ein Rollprägeverfahren realisieren.

Des weiteren läßt sich mit der vorschlagsgemäßen Lösung sowohl ein Hohlprägen als auch ein Massivprägen bzw. Vollprägen realisieren. Ein entsprechendes Widerlager für das Werkstück 8 bzw. ein entsprechendes Gegenwerkzeug ist aus Vereinfachungsgründen nicht dargestellt.

Das vorschlagsgemäße Prägewerkzeug 1 gestattet eine sehr feine Strukturierung des Werkstücks 8 bzw. dessen Oberfläche 9. Bedarfsweise kann das Werkstück 8 bzw. die Oberfläche 9 auch mehrfach, zunächst mit einem gröber strukturierten - ggf. auch in bisher üblicher Weise hergestellten - Prägewerkzeug und anschließend mit dem feiner strukturierten, vorschlagsgemäßen Prägewerkzeug 1 profiliert bzw, strukturiert werden. Hierbei wird insbesondere beim zweiten Prägen mit dem feineren Prägewerkzeug 1 eine geringere Prägekraft eingesetzt und/oder in einem Zwischenschritt die Oberfläche 9 gehärtet, um die beim ersten Prägen erzeugte Grobstruktur nicht gänzlich aufzuheben, sondern eine Überlagerung aus der Grobstruktur und der Feinstruktur der beiden Prägewerkzeuge zu erreichen. So ist es beispielsweise möglich, auf der Oberfläche 9 verhältnismäßig große Erhebungen im Bereich von 0,1 bis 50 µm mit jeweils mehreren, relativ kleinen Vorsprüngen, beispielsweise im Bereich von 10 bis 400 nm, auf der Oberfläche 9 des Werkstücks 8 zu erzeugen.

Die vorschlagsgemäße Lösung ermöglicht auf sehr einfache, kostengünstige Weise ein sehr feines Strukturieren der Oberfläche 9. Dementsprechend findet sich ein sehr breiter Anwendungsbereich. Beispielsweise ist eine solche, insbesondere sehr feine Strukturierung bei Antireflex-Schichten, zur Veränderung der Strahlungsemission strukturierter Oberflächen, bei der Sensorik, bei der Katalyse, bei selbstreinigenden Oberflächen, bei der Verbesserung der Oberflächenbenetzbarkeit und dergleichen verwendbar bzw. einsetzbar. Insbesondere erstreckt sich die vorschlagsgemäße Lösung auch auf die Verwendung von Werkstücken 8 mit strukturierten Oberflächen 9, die mittels des vorschlagsgemäßen Prägewerkzeugs 1 strukturiert worden sind, für die vorgenannten Zwecke.

Insbesondere eignet sich die vorschlagsgemäße Lösung für das Prägen von Kunststoffen - beispielsweise PMMA (Polymethylmethacrylaten), Teflon o. dgl. -, Metalle ― beispielsweise Gold, Silber, Platin, Blei, Idium, Kadmium, Zink o. dgl. -, Polymerbeschichtungen - beispielsweise Lacken, Farben o. dgl. - und anorganischen Beschichtungssystemen u.s.w.

Allgemein ausgedrückt liegt ein wesentlicher Aspekt der vorliegenden Erfindung darin, eine Oberflächenschicht mit durch anodische Oxidation unmittelbar bzw. vorlagenfrei gebildeten Hohlräumen als Matritze bzw. Patritze einzusetzen, um eine Oberflächenstrukturierung im Nanometerbereich zu ermöglichen.

## Patentansprüche

1. Prägewerkzeug (1) mit einer strukturierten Prägefläche (2), wobei die Prägefläche (2) durch eine anodisch oxidierte Oberflächenschicht (3) oder Deckschicht (6) mit offenen, durch die anodische Oxidation vorlagenfrei erzeugten Hohlräumen (4) gebildet ist, wobei die Hohlräume (4) Öffnungsflächen mit einem mittleren Durchmesser (D) von 10 bis 500 nm aufweisen und/oder die Strukturbreite (S) der Prägefläche (2) 30 bis 600 nm beträgt.

2. Prägewerkzeug nach Anspruch 1, **dadurch gekennzeichnet, daß** die Hohlräume (4) Öffnungsflächen mit einem mittleren, vorzugsweise zumindest im wesentlichen einheitlichen Durchmesser (D) von 15 bis 200 nm, insbesondere von 20 bis 100 nm, aufweisen.

3. Prägewerkzeug nach Anspruch 1 oder 2, **dadurch gekennzeichnet, daß** die Strukturbreite (S) der Prägefläche (2) 50 bis 200 nm beträgt.

4. Prägewerkzeug nach einem der voranstehenden Ansprüche, **dadurch gekennzeichnet, daß** die Hohlräume (4) eine Tiefe (T) aufweisen, die mindestens das 0,5-fache des mittleren Durchmessers (D) der Hohlräume (4) beträgt und insbesondere größer als der mittlere Durchmesser (D) der Hohlräume (4) ist.

5. Prägewerkzeug nach einem der voranstehenden Ansprüche, **dadurch gekennzeichnet, daß** die Hohlräume (4) konisch ausgebildet sind.

6. Prägewerkzeug nach einem der voranstehenden Ansprüche, **dadurch gekennzeichnet, daß** die Hohlräume (4) in ihrer Form, Tiefe und/oder Flächendichte über die Prägefläche (2), insbesondere bereichsweise, variieren und/oder nur bereichsweise auf der Prägefläche (2) ausgebildet sind.

7. Prägewerkzeug nach einem der voranstehenden Ansprüche, **dadurch gekennzeichnet, daß** die Prägefläche (2) sowohl eine Fein- als auch eine Grobstruktur aufweist.

8. Prägewerkzeug nach einem der voranstehenden Ansprüche, **dadurch gekennzeichnet, daß** die Prägefläche (2) gekrümmt, vorzugsweise gewölbt ist.

9. Prägewerkzeug nach einem der voranstehenden Ansprüche, **dadurch gekennzeichnet, daß** die Oberflächenschicht (3) bzw. die Deckschicht (6) mit den Hohlräumen (4) zumindest im wesentlichen aus Aluminumoxid, Siliziumoxid, Eisenoxid, oxidiertem Stahl und/oder Titanoxid besteht.

10. Verfahren zum Herstellen eines Prägewerkzeugs (1) mit einer strukturierten Prägefläche (2), wobei eine die Prägefläche (2) bildende Oberflächenschicht (3) oder Deckschicht (6) des Prägewerkzeugs (1) zur vorlagenfreien Erzeugung von offenen Hohlräumen (4) zumindest bereichsweise anodisch oxidiert wird, so daß gleichförmige und/oder regelmäßig über die Oberfläche bzw. den Oberflächenbereich der Prägefläche (2) verteilte Hohlräume (4) gebildet werden.

11. Verfahren nach Anspruch 10, **dadurch gekennzeichnet, daß** die Oberflächenschicht (3) bzw. Deckschicht (6) potentiostatisch oxidiert wird.

12. Verfahren nach Anspruch 10, **dadurch gekennzeichnet, daß** die Oberflächenschicht (3) bzw. Deckschicht (6) mit variierender Spannung, insbesondere galvanostatisch, oxidiert wird.

13. Verfahren nach einem der Ansprüche 10 bis 12, **dadurch gekennzeichnet, daß** Aluminium, Silizium, Eisen, Stahl und/oder Titan oxidiert wird.

14. Verfahren nach einem der Ansprüche 10 bis 13, **dadurch gekennzeichnet, daß** die Prägefläche (2) vor und/oder nach dem Oxidieren, insbesondere zur Erzeugung einer Grobstruktur, modifiziert wird, insbesondere durch lithographische Verfahren, Ätzen und/oder sonstige, vorzugsweise materialabtragende Verfahren.

15. Verfahren zur Strukturierung einer Oberfläche (9) eines Werkstücks (8) mittels eines Prägewerkzeugs (1) mit einer strukturierten Prägefläche (2),
**dadurch gekennzeichnet,**
**daß** die zu strukturierende Oberfläche (9) mittels eines Prägewerkzeugs (1) gemäß einem der Ansprüche 1 bis 9 strukturiert wird, wobei die Prägefläche (2) des Prägewerkzeugs (1) auf die zu strukturierende Oberfläche (9) gedrückt und/oder auf dieser abgerollt wird.

16. Verfahren nach Anspruch 15, **dadurch gekennzeichnet, daß** die Prägefläche (2) des Prägewerkzeugs (1) mit einer vorbestimmten Prägekraft auf die zu strukturierende Oberfläche (9) gedrückt und/oder auf dieser abgerollt wird und/oder die Oberfläche (9) zunächst in einem ersten Schritt mittels eines ersten Prägewerkzeugs (1) grob strukturiert und anschließend in einem zweiten Schritt, insbesondere mit verringerter Prägekraft und/oder insbesondere nach vorzugsweise chemischem Härten der Oberfläche (9), mittels eines zweiten Prägewerkzeugs (1) fein strukturiert wird.

17. Verwendung einer mit offenen Hohlräumen (4) durch anodische Oxidation unmittelbar versehenen und dadurch im Nanometerbereich strukturierten Oberflächenschicht (3) oder Deckschicht (6), insbesondere eines Prägewerkzeugs (1) nach einem der Ansprüche 1 bis 9, wobei die Oberflächenschicht (3) bzw. Deckschicht (6) mit den Hohlräumen (4) als Prägefläche (2) zur Strukturierung einer Oberfläche (9) eines Werkstücks (8) verwendet wird.

18. Verwendung nach Anspruch 17, **dadurch gekennzeichnet, daß** die Oberflächenschicht (3) bzw. Deckschicht (6) zumindest im wesentlichen aus Aluminiumoxid, Siliziumdioxid, Eisenoxid, oxidiertem Stahl und/oder Titandioxid gebildet ist.

## Claims

1. Stamping tool (1) having a structured stamping surface (2), the stamping surface (2) being formed by an anodically oxidized surface layer (3) or covering layer (6) with open cavities (4) produced by anodic oxidation without the need for a template, the cavities (4) having opening areas with a mean diameter (D) of from 10 to 500 nm and/or the structure width (S) of the stamping surface (2) being from 30 to 600 nm.

2. Stamping tool according to Claim 1, **characterized in that** the cavities (4) have opening areas with a mean, preferably at least substantially uniform diameter (D) of from 15 to 200 nm, in particular from 20 to 100 nm.

3. Stamping tool according to Claim 1 or 2, **characterized in that** the structure width (S) of the stamping surface (2) is of from 50 to 200 nm.

4. Stamping tool according to one of the preceding claims, **characterized in that** the cavities (4) have a depth (D) which is at least 0.5 times the mean diameter (D) of the cavities (4) and in particular is greater than the mean diameter (D) of the cavities (4).

5. Stamping tool according to one of the preceding claims, **characterized in that** the cavities (4) are conical in form.

6. Stamping tool according to one of the preceding claims, **characterized in that** the shape, depth and/or surface density of the cavities (4) vary over the stamping surface (2), in particular in regions, and/or the cavities (4) are only formed in certain regions on the stamping surface (2).

7. Stamping tool according to one of the preceding claims, **characterized in that** the stamping surface (2) has both a fine structure and a coarse structure.

8. Stamping tool according to one of the preceding claims, **characterized in that** the stamping surface (2) is curved, preferably convexly.

9. Stamping tool according to one of the preceding claims, **characterized in that** the surface layer (3) or the covering layer (6) having the cavities (4) at least substantially comprises aluminium oxide, silicon oxide, iron oxide, oxidized steel and/or titanium oxide.

10. Process for producing a stamping tool (1) with a structured stamping surface (2), in which a surface layer (3) or covering layer (6), which forms the stamping surface (2), of the stamping tool (1) is anodically oxidized at least in regions in order to produce open cavities (4) without the need for a template, so that cavities (4) which are uniform and/or distributed regularly over the surface or surface region of the stamping surface (2) are formed.

11. Process according to Claim 10, **characterized in that** the surface layer (3) or covering layer (6) is potentiostatically oxidized.

12. Process according to Claim 10, **characterized in that** the surface layer (3) or covering layer (6) is oxidized using a variable voltage, in particular galvanostatically.

13. Process according to one of Claims 10 to 12, **characterized in that** aluminium, silicon, iron, steel and/or titanium is oxidized.

14. Process according to one of Claims 10 to 13, **characterized in that** the stamping surface (2) is modified, in particular by lithographic processes, etching and/or other, preferably material-removing processes, in particular in order to produce a coarse structure, before and/or after the oxidation.

15. Process for structuring a surface (9) of a workpiece (8) by means of a stamping tool (1) with a structured stamping surface (2), **characterized in that** the surface (9) which is to be structured is structured by means of a stamping tool (1) according to one of Claims 1 to 9, the stamping surface (2) of the stamping tool (1) being pressed onto and/or rolled along the surface (9) which is to be structured.

16. Process according to Claim 15, **characterized in that** the stamping surface (2) of the stamping tool (1) is rolled along or pressed onto the surface (9) which is to be structured under a predetermined stamping force and/or the surface (9) is firstly coarsely structured in a first step by means of a first stamping tool (1) and then finely structured in a second step, in particular with a reduced stamping force and/or in particular after preferably chemical hardening of the surface (9), by means of a second stamping tool (1).

17. Use of a covering layer (6) or surface layer (3) which has been provided directly with open cavities (4) by anodic oxidation and as a result has been structured in the nanometer range, in particular on a stamping tool (1) according to one of Claims 1 to 9, the surface layer (3) or covering layer (6) having the cavities (4) being used as a stamping surface (2) for structuring a surface (9) of a workpiece (8).

18. Use according to Claim 17, **characterized in that** the surface layer (3) or covering layer (6) is at least substantially formed from aluminium oxide, silicon oxide, iron oxide, oxidized steel and/or titanium dioxide.

## Revendications

1. Outil d'estampage (1) comprenant une surface d'estampage structurée (2), la surface d'estampage (2) étant formée par une couche superficielle (3) soumise à une oxydation par voie anodique ou une couche de recouvrement (6) comprenant des espaces creux (4) générés en l'absence d'un original par l'oxydation anodique, les espaces creux (4) présentant des surfaces d'ouverture possédant un diamètre moyen (D) de 10 à 500 nm et/ou la largeur de structure (S) de la surface d'estampage (2) s'élevant de 30 à 600 nm.

2. Outil d'estampage selon la revendication 1, **caractérisé en ce que** les espaces creux (4) présentent des surfaces d'ouverture possédant un diamètre moyen (D), de préférence au moins essentiellement homogène, de 15 à 200 nm, en particulier de 20 à 100 nm.

3. Outil d'estampage selon la revendication 1 ou 2, **caractérisé en ce que** la largeur de structure (S) de la surface d'estampage (2) s'élève de 50 à 200 nm.

4. Outil d'estampage selon l'une quelconque des revendications précédentes, **caractérisé en ce que** les espaces (4) présentent une profondeur (T) qui représente au moins 0,5 fois le diamètre moyen (D) des espaces creux (4) et qui en particulier est supérieure au diamètre moyen (D) des espaces creux (4).

5. Outil d'estampage selon l'une quelconque des revendications précédentes, **caractérisé en ce que** les espaces creux (4) sont de forme conique.

6. Outil d'estampage selon l'une quelconque des revendications précédentes, **caractérisé en ce que** les espaces creux (4) varient en ce qui concerne leur forme, leur profondeur et/ou leur densité superficielle sur la surface d'estampage (2), en particulier par zones, et/ou ne sont réalisés que par zones sur la surface d'estampage (2).

7. Outil d'estampage selon l'une quelconque des revendications précédentes, **caractérisé en ce que** la surface d'estampage (2) présente une structure aussi bien fine que grossière.

8. Outil d'estampage selon l'une quelconque des revendications précédentes, **caractérisé en ce que** la surface d'estampage (2) est courbe, de préférence bombée.

9. Outil d'estampage selon l'une quelconque des revendications précédentes, **caractérisé en ce que** la couche superficielle (3) respectivement la couche de recouvrement (6) comprenant les espaces creux (4) est constituée, au moins de manière essentielle d'oxyde d'aluminium, d'oxyde de silicium, d'oxyde de fer, d'acier oxydé et/ou d'oxyde de titane.

10. Procédé pour la fabrication d'un outil d'estampage 1 comprenant une surface d'estampage structurée (2), dans lequel une couche superficielle (3) ou une couche de recouvrement (6) de l'outil d'estampage (1), formant la surface d'estampage (2) est soumise à une oxydation par voie anodique pour la génération, en l'absence d'un original, d'espaces creux ouverts (4), au moins par zones, de telle sorte que l'on obtient des espaces creux (4) uniformes et/ou répartis de manière régulière sur la surface, respectivement sur la zone superficielle de la surface d'estampage (2).

11. Procédé selon la revendication 10, **caractérisé en ce que** la couche superficielle (3), respectivement la couche de recouvrement (6) est soumise à une oxydation par voie potentiostatique.

12. Procédé selon la revendication 10, **caractérisé en ce que** la couche superficielle (3), respectivement la couche de recouvrement (6) est soumise à une oxydation avec une tension variable, en particulier par voie galvanostatique.

13. Procédé selon l'une quelconque des revendications 10 à 12, **caractérisé en ce qu'**on oxyde de l'aluminium, du silicium, du fer, de l'acier et/ou du titane.

14. Procédé selon l'une quelconque des revendications 10 à 13, **caractérisé en ce que** la surface d'estampage (2) avant et/ou après l'oxydation, en particulier pour générer une structure grossière, est soumise à une modification, en particulier via des procédés lithographiques, par gravure et/ou via d'autres procédés, de préférence des procédés éliminant de la matière.

15. Procédé pour la structuration d'une surface (9) d'une pièce à usiner (8) à l'aide d'un outil d'estampage (1) comprenant une surface d'estampage structurée (2), **caractérisé en ce que** la surface à structurer (9) est structurée à l'aide d'un outil d'estampage (1) selon l'une quelconque des revendications 1 à 9, la surface d'estampage (2) de l'outil d'estampage (1) étant comprimée sur la surface à structurer (9) et/ou étant déroulée sur cette dernière.

16. Procédé selon la revendication 15, **caractérisé en ce que** la surface d'estampage (2) de l'outil d'estampage (1) est comprimée et/ou est déroulée avec une force d'estampage prédéfinie sur la surface à structurer (9) et/ou la surface (9) est d'abord soumise, dans une première étape, à une structuration grossière à l'aide d'un premier outil d'estampage (1) avant d'être soumis à une structuration fine, dans une deuxième étape, à l'aide d'un deuxième outil d'estampage (1), en particulier avec une force d'estampage réduite et/ou en particulier après un durcissement, de préférence chimique, de la surface (9).

17. Utilisation d'une couche superficielle (3) ou d'une couche de recouvrement (6) munie directement d'espaces creux ouverts (4) par oxydation anodique et par conséquent structurée à l'échelle du nanomètre, en particulier d'un outil d'estampage selon l'une quelconque des revendications 1 à 9, la couche superficielle (3), respectivement la couche de recouvrement (6) comprenant les espaces creux (4) étant utilisée pour la structuration d'une surface (9) d'une pièce à usiner (8).

18. Utilisation selon la revendication 17, **caractérisée en ce que** la couche superficielle (3), respectivement la couche de recouvrement (6) est formée, au moins à titre essentiel, à partir d'oxyde d'aluminium, de dioxyde de silicium, d'oxyde de fer, d'acier oxydé et/ou de dioxyde de titane.
